# EUROPEAN PATENT SPECIFICATION

(11) **EP 3 486 498 B1**
(45) Date of publication and mention of the grant of the patent: **03.04.2024**
(21) Application number: 17201926.7
(22) Date of filing: 15.11.2017
(51) Int. Cl.: F04D 29/54, F02C 6/08, F01D 25/26, F04D 29/58, F04D 29/52

(54) **AXIAL COMPRESSOR FOR GAS TURBINE ENGINES AND GAS TURBINE ENGINE INCORPORATING SAID AXIAL COMPRESSOR**
AXIALKOMPRESSOR FÜR GASTURBINENMOTOREN UND GASTURBINENMOTOR MIT BESAGTEM AXIALKOMPRESSOR
COMPRESSEUR AXIAL POUR MOTEURS À TURBINE À GAZ ET MOTEUR À TURBINE À GAZ INCORPORANT LEDIT COMPRESSEUR AXIAL

(43) Date of publication of application: 22.05.2019
(73) Proprietor: Ansaldo Energia IP UK Limited, London W1G 9DQ (GB)
(72) Inventor: GOMEZ- LOR- LOPEZ, Isaac, 5430 WETTINGEN (CH); TAHENY, Oliver Joseph, 8046 ZÜRICH (CH); ZIERER, Thomas, 5408 ENNETADEN (CH)
(74) Representative: Studio Torta S.p.A.

(56) References cited:
- EP-A1- 2 977 590
- EP-A1- 2 987 967
- JP-A- S62 168 999
- US-A1- 2003 223 863
- US-A1- 2007 196 204

## Description

### TECHNICAL FIELD

The present invention relates to a axial compressor for gas turbine engines and to a gas turbine engine incorporating said axial compressor.

More specifically, the present invention preferably relates to a multi-stage axial compressor for a gas turbine engine adapted to drive into rotation an electric generator. Use to which the following description will make explicit reference purely by way of example and without implying any loss of generality.

### BACKGROUND OF THE INVENTION

As is known, a gas turbine engine generally comprises: a multi-stage axial compressor in which compression of the outside air occurs for producing a flow of compressed air; a combustor assembly which is located downstream of the axial compressor and in which combustion of a mixture of the compressed air arriving from the multi-stage compressor and fuel occurs for producing a flow of hot gasses; and a multi-stage expansion turbine which is located downstream of the combustor and in which expansion of the hot gasses arriving from the combustor assembly occurs before said hot gasses leave the gas turbine engine.

Some compressed air is furthermore extracted from the intermediate stages of the compressor for cooling, during steady state operation of the gas turbine engine, the blading of the expansion turbine and other parts of the engine.

In addition, during start-up, shut-down and similar transient maneuvers, a great amount of compressed air is to be selectively extracted from the intermediate stages of the compressor and released to the atmosphere for allowing stable operation of the gas turbine engine. The extraction of compressed air during transient maneuvers is commonly called air blow off.

In both cases, the compressed air is extracted from the longitudinal cavity of the compressor via one or more annular bleeding slots that are formed in the peripheral wall of the compressor tubular casing, each immediately downstream of a corresponding intermediate stage of the compressor. In particular, the compressor tubular casing comprises an outer compressor housing and an inner compressor vane carrier wherein this vane carrier can be realized in form of a plurality of separated parts. In this configuration, the bleeding slots are defined by the edges of two adjacent vane carrier parts. Each bleeding slot directly communicates with a respective annular bleed cavity which is located between the outer compressor housing and the compressor vane carrier so as to surround the compressor longitudinal cavity, and furthermore communicates with an external piping system that can selectively release the compressed air to the atmosphere or channel the compressed air towards the expansion-turbine blading and other parts of the engine.

During air blow off, the temperature of the air in the bleed cavity can be very different to the local temperature of both the vane carrier section and the rotor of the compressor, and this too-high temperature difference can lead to an undesired very fast thermal deformation of the vane carrier section of the compressor, with all problems that this entails.

For example, during hot restart of the gas turbine engine, the air inside the bleed cavity is significantly colder than the adjacent vane carrier section. This too-high temperature difference can lead to an undesired fast shrinkage of the vane carrier section of the compressor and, as a consequence, to a rubbing of the compressor blades on the vane carrier section.

Thus, the clearances between stator and rotor assemblies of the compressor have to be increased to avoid stator or rotor damages due to rubbing. However, increased clearances involve poorer performance of the gas turbine and a reduced stability of the compressor assembly.

US2003/223863 A1, US2007/196204 A1 and EP2987967 A1 disclose an axial compressor having at least one bleed cavity and an air deflector member which is adapted to divert/guide the airflow of compressed air entering into the bleed cavity.

### DISCLOSURE OF THE INVENTION

Aim of the present invention is to reduce the effects of the rapid air extraction from the annular bleed cavities of the compressor.

In compliance with these aims, according to the present invention there is provided an axial compressor for gas turbine engines as defined in Claim 1 and preferably, though not necessarily, in any one of the dependent claims.

Moreover according to the present invention there is also provided a gas turbine engine as defined in Claim 12.

### BRIEF DESCRIPTION OF THE DRAWINGS

The present invention will now be described with reference to the accompanying drawings, which show a non-limitative embodiment thereof, in which:
- Figure 1 is a schematic view of a gas turbine engine provided with an axial compressor realized according to the teachings of the present invention;
- Figure 2 is a simplified side view of a portion of an axial compressor realized according to the teachings of the present invention, with parts in section and parts removed for clarity;
- Figure 3 is a perspective view of the air deflector member only partially shown in Figure 2;
- Figure 4 is a perspective view of a segment of the air deflector member shown in Figure 3;
- Figure 5 is a perspective view of an alternative embodiment of the air deflector member shown in Figures 3 and 4; whereas
- Figures 6-9 are simplified side views of alternative embodiments of the axial compressor shown in Figure 2, with parts in section and parts removed for clarity.

### DETAILED DESCRIPTION OF THE INVENTION

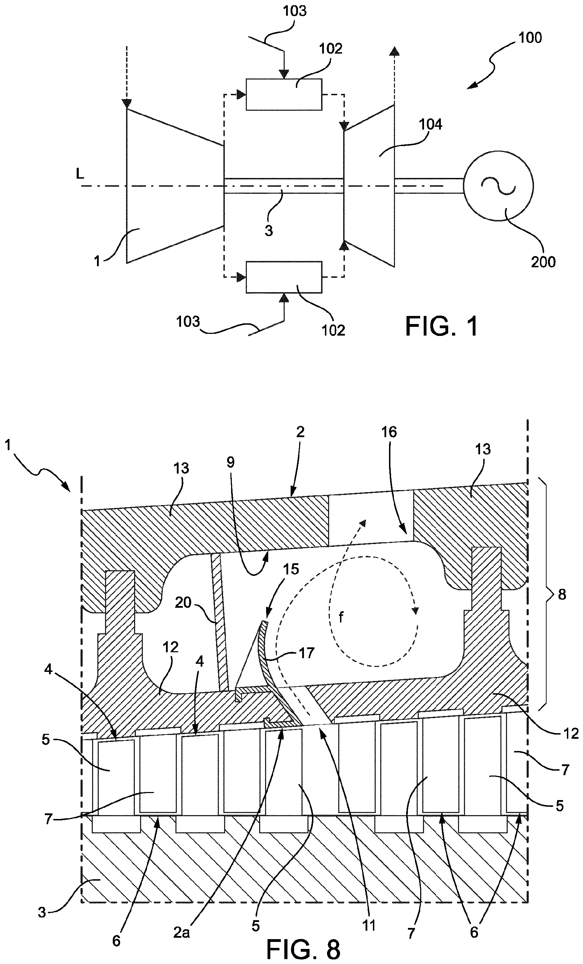

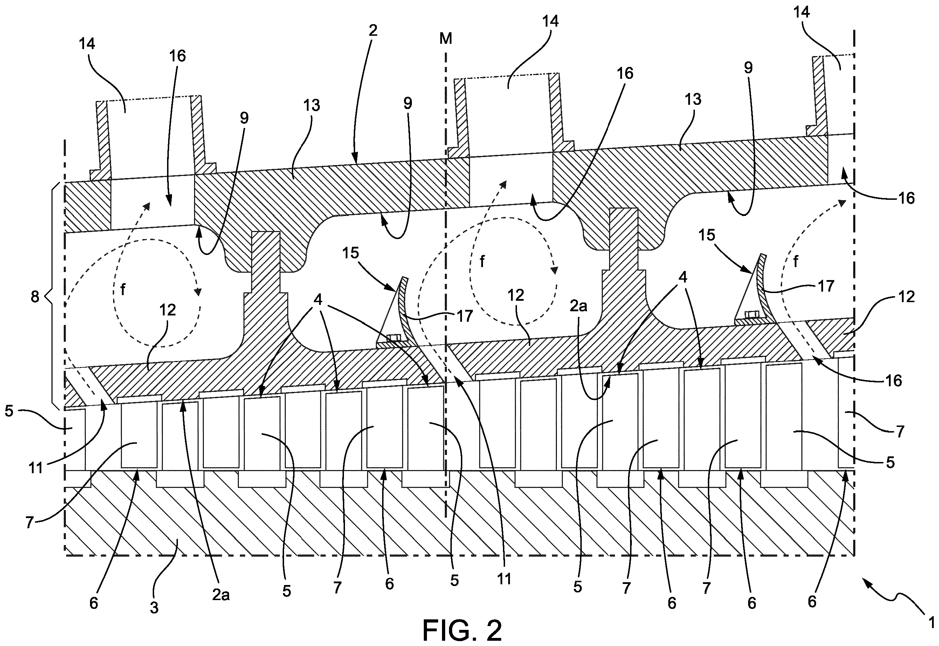

With reference to Figures 1 and 2, number 1 denotes as a whole a multi-stage axial compressor suitable to be incorporated into a gas turbine engine 100 preferably particularly adapted to drive into rotation a traditional electric generator 200.

More in detail, the gas turbine engine 100 preferably basically comprises: a multi-stage axial compressor 1 in which compression of the outside air occurs for producing a flow of compressed air; at least one combustor assembly 102 which is located downstream of the axial compressor 1 and in which combustion of a mixture of compressed air arriving from the axial compressor 1 and fuel arriving from a fuel supply line 103 occurs for producing a flow of hot gasses; and a preferably multi-stage, expansion turbine 104 which is located downstream of the combustor assembly 102 and in which expansion of the hot gasses arriving from combustor assembly 102 occurs before said hot gasses leave the gas turbine engine 100.

With reference to Figure 2, the multi-stage axial compressor 1 in turn comprises: a tubular casing 2 preferably extending coaxial to the longitudinal axis L of the gas turbine engine 100; a drive shaft 3 extending in axially rotatable manner inside the central cavity 2a of tubular casing 2 nearly coaxial to the latter, i.e. coaxial to the longitudinal axis L of the gas turbine engine 100; a number of annular blade rows 4 which are suitably spaced along the drive shaft 3 and are each formed by a series of nearly radially-extending, airfoil blades 5 that are circumferentially arranged on, and stably fixed to, the drive shaft 3; and a number of annular vane rows 6 which are intercalated to the annular blade rows 4 and are each formed by a series of nearly radially-extending oblong airfoil vanes 7 that are circumferentially arranged on, and stably fixed to, the peripheral wall 8 of casing 2 so as to be adjacent to the annular blade rows 4.

Tubular casing 2 and the annular vane rows 6 contribute in forming the stator assembly of the axial compressor 1. The drive shaft 3 and the annular blade rows 4 contribute in forming the rotor assembly of the axial compressor 1.

Each annular blade row 4 and the adjacent annular vane row 6 furthermore form a respective compressor stage of axial compressor 1.

The multi-stage axial compressor 1 is additionally provided with at least one and preferably a number of preferably substantially annular-shaped, bleed cavities 9 that are formed within the peripheral wall 8 of tubular casing 2 conveniently spaced along the longitudinal axis L of tubular casing 2, preferably so as to surround/encircle the central cavity 2a of tubular casing 2; and with at least one and preferably a number of bleeding slots 11 each of which is preferably annular in shape, and is formed in the peripheral wall 8 of casing 2 so as to put the adjacent bleed cavity 9 into direct communication with the central cavity 2a of tubular casing 2.

More specifically, the/each bleeding slot 11 is formed in the peripheral wall 8 of casing 2 immediately downstream of a corresponding intermediate compressor stage of axial compressor 1. Alternatively, the the bleeding slot 11 can be realized at a blade row.

Each bleeding slot 11 is therefore able to channel, into the corresponding bleed cavity 9 of tubular casing 2, a part of the compressed air coming out of the intermediate compressor stage of axial compressor 1.

In the example shown, in particular, the tubular casing 2 preferably has a twin-shell structure that includes: one or more vane carrier sections 12 forming a substantially tubular-shaped inner structure that surrounds the drive shaft 3 and directly supports the annular vane rows 6; and a tubular outer housing 13 surrounding and directly supporting the one or more vane carrier sections 12.

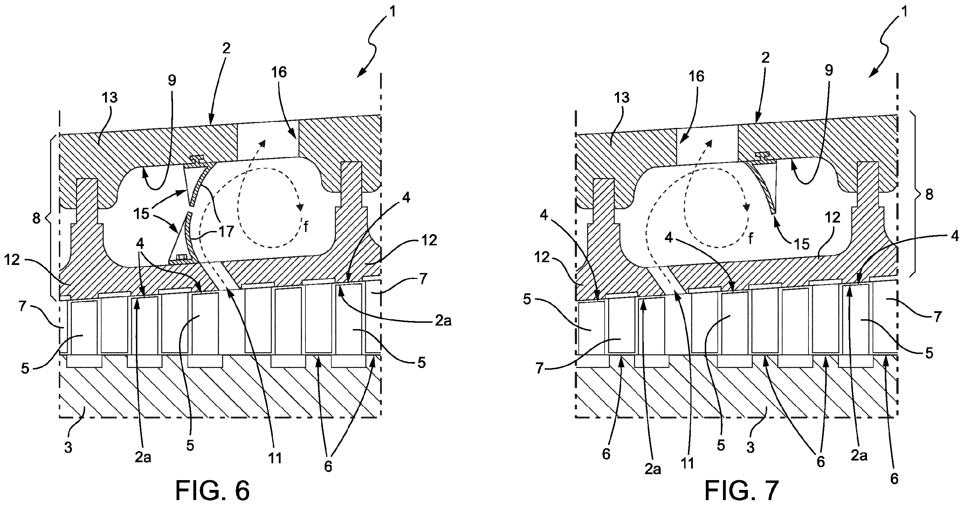

Preferably the one or more bleed cavities 9 are located between the outer housing 13 and the vane carrier sections 12, whereas the one or more annular bleeding slots 11 are preferably delimited by the edges or rims of two adjacent vane carrier sections 12. Preferably the/each annular bleeding slot 11 is furthermore nearly coplanar to the midplane M of the corresponding bleed cavity 9, i.e substantially at the middle of the bleed cavity 9 along the longitudinal axis L. However, as will described with reference to the figure 7, the bleeding slot 11 can be realized at a upstream or downstream portion of the bleed cavity 9 along the longitudinal axis L.

According to an alternative embodiment the annular bleed cavities 9 and the annular bleeding slots 11 are directly casted in the tubular casing 2.

With reference to Figure 2, the multi-stage axial compressor 1 preferably additionally comprises an external piping system 14 that directly communicates with the/each bleed cavity 9 of tubular casing 2 for extracting the compressed air arriving into the same bleed cavity 9 via the corresponding bleeding slot 11. Preferably this piping system 14 is furthermore designed to channel the compressed air extracted from the/each bleed cavity 9 towards the expansion turbine 104 for cooling the blading of the same expansion turbine 104, and optionally also to selectively release the compressed air to the atmosphere in known manner.

With reference to Figures 2, 3 and 4, the multi-stage axial compressor 1 additionally comprises, preferably for each bleed cavity 9, one or more air deflector members 15 that are firmly fixed to the tubular casing 2, inside the bleed cavity 9, and are adapted to locally divert/guide the airflow f of compressed air entering and/or circulating inside the bleed cavity 9, so as to reduce the air turbulence area inside the bleed cavity 9.

In other words, the/each air deflector member 15 is designed to reduce, inside the bleed cavity 9, the effective space at disposal of the turbulent airflow f entering and/or circulating inside the bleed cavity 9 for whirling while quickly flowing out of the bleed cavity 9 via the air outlet/s 16.

More in detail, according to the invention the/each air deflector members 15 is designed to guide/divert the airflow f towards the air outlet/s 16 of the bleed cavity 9, so as to minimize or at least reduce the size of the vortices that the airflow f normally forms while quickly flowing out of the bleed cavity 9 via the air outlet/s 16.

With reference to Figures 2, 3 and 4, in particular, the/each air deflector member 15 is preferably annular in shape, and is provided with a nearly circumferentially-arranged flap portion 17 that rises from the inner surface of the bleed cavity 9 to form a ramp or slope for the airflow f which is preferably capable of diverting the airflow f towards the center of the bleed cavity 9.

According to the invention, this flap portion 17 moreover has an arched profile so as to smoothly turn the velocity vector of the airflow f in direction of the air outlets 16.

In addition to the above the/each air deflector member 15 is located inside the bleed cavity 9, adjacent to the annular bleeding slot 11.

In other words, in the example shown the/each air deflector member 15 is preferably located on the vane carrier section 12 of tubular casing 2, adjacent to the corresponding annular bleeding slot 11.

Preferably the/each air deflector member 15 is moreover realized in form of an independent piece firmly secured to the peripheral wall 8 of tubular casing 2, or rather to the vane carrier section 12 of tubular casing 2.

With reference to Figures 2, 3 and 4, preferably a plurality of air deflector members 15 may be arranged one adjacent to the other in order to form modular segments 18 of a ring arranged circumferentially inside the peripheral wall 8 of tubular casing 2. In this configuration, the air deflector members 15 are nearly circumferentially adjacent and coplanar to one another, so as to form a circular rib that protrudes from the inner surface of bleed cavity 9.

More specifically, in the example shown each air deflector member 15 has a substantially L-shaped cross-section, and which is preferably slightly bent so as to extend locally tangent to the inner surface of bleed cavity 9. Of course other coupling features between the air deflector members 15 and the inner surface of bleed cavity 9 are possible.

Preferably each air deflector member 15 is moreover bolted or otherwise rigidly connected/joined to the peripheral wall 8 of tubular casing 2, or rather to the vane carrier section 12 of tubular casing 2.

General operation of multi-stage axial compressor 1 and of gas turbine engine 100 are similar to that of any other multi-stage axial compressor and of gas turbine engine, thus no further explanation are required.

As regards the air deflector members 15 inside the bleed cavities 9, the thermal deformation of the vane carrier section 12 is enhanced by the higher heat transfer coefficient between the body of the vane carrier section 12 and the airflow f quickly flowing out of bleed cavity 9 during air blow off and similar transient maneuvers.

On flowing out of bleed cavity 9, in fact, the airflow f produces strong vortices that locally increase the relative velocity between the airflow f and the vane carrier section 12 and therefore enhance the heat transfer.

The/each air deflector member 15 significantly reduces the intensity and the structure of these vortices, thus reducing the heat transfer coefficient between the body of vane carrier section 12 and the airflow f.

As a result, thermal positive and negative expansions of the stator assembly of axial compressor 1 relative to the rotor assembly are significantly reduced, actually without reducing the inner volume of bleed cavities 9.

The advantages resulting from the presence of the air deflector member/s 15 are large in number.

First of all, the reduced thermal positive and negative expansion of the stator assembly of axial compressor 1 allows to significantly reduce the clearances between stator and rotor assembly of axial compressor 1, thus improving overall performance of the axial compressor 1.

Moreover, the air deflectors member/s 15 reduce/s the pressure losses of the airflow f flowing out of the bleed cavities. 9

Clearly, changes may be made to the multi-stage axial compressor 1 and to the gas turbine engine 100 without, however, departing from the scope of the present invention, as defined in the attached claims.

For example, the/each bleeding slot 11 may consist of a series of oblong openings arranged circumferentially all around the peripheral wall 8 of casing 2, nearly coplanar to one other.

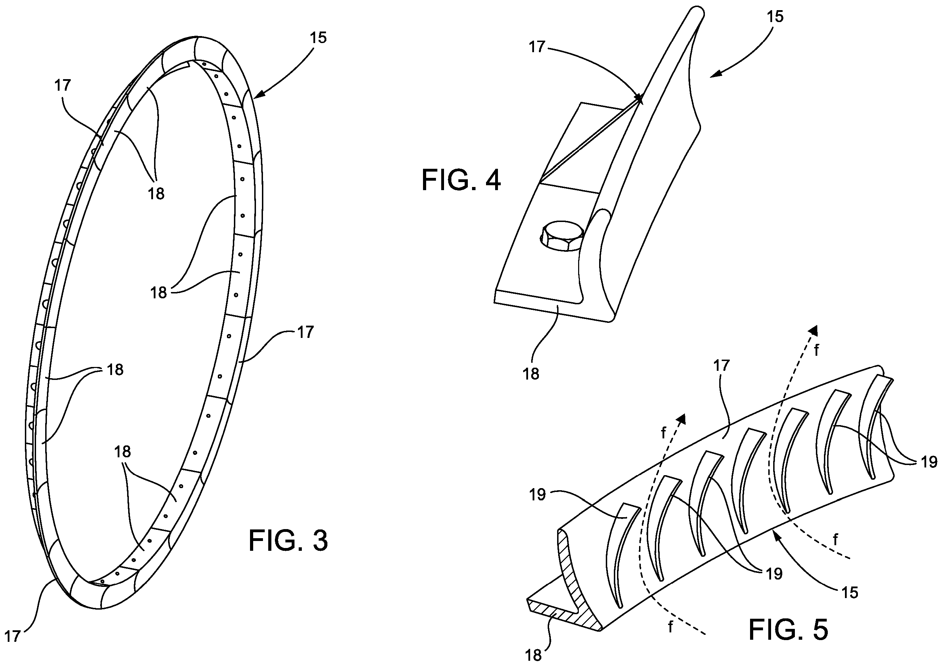

Furthermore, with reference to Figure 5, the flap portion 17 of the/each air deflector member 15 has, on its front face, a number of protruding fins 19 which are preferably spaced side by side to one another in a circumferential direction, and which preferably have a slightly arched shape/profile so as to gradually change the circumferential component if the flow vector of the airflow f extracted from the compressor annulus.

With reference to Figure 6, according to a first alternative embodiment the axial compressor 1 preferably complies, inside at least one and preferably all bleed cavities 9, a pair of air deflector members 15 preferably substantially coplanar to one another.

In other words, a first air deflector member 15 is preferably fixed/located inside the bleed cavity 9, on the outer side of the vane carrier section 12, whereas a second air deflector member 15 is preferably fixed/located inside the bleed cavity 9, on the inner side of outer housing 13.

Preferably the flap portions 17 of said two air deflector members 15 furthermore extend one towards the other.

With reference to Figure 7, according to a second alternative embodiment the air deflector member 15 is preferably located inside the bleed cavity 9, adjacent to the air outlet 16 of the bleed cavity 9.

In other words, the air deflector member 15 is preferably fixed/located on the inner side of tubular outer housing 13. Moreover, according to the embodiment of figure 7, the bleeding slot 11 is not realized in the middle of the bleed cavity 9 along the longitudinal axis but at an upstream portion of bleed cavity 9. According to an alternative embodiment, the bleeding slot 11 can be realized at a downstream portion of bleed cavity 9 along the longitudinal axis.

Finally, with reference to Figure 8, according to a third alternative embodiment the air deflector member 15 is preferably located in the annular bleeding slot 11.

More specifically, the air deflector member 15 is preferably sits onto the nose or rim of one of the two vane carrier sections 12 delimiting the annular bleeding slot 11. In this case the air deflector member 15 acts as a thermal isolator to reduce the heat transfer coefficient during the air blow off and similar transient maneuvers. Preferably, inside the bleed cavity 9 and upstream the air deflector member 15 a partition wall 20 could be present connecting the walls 12 and 13 in order to reduce the effective space for the airflow f. Of course, this partition wall 20 could be applied also in the invention embodiments foregoing described and represented in the figures 2, 6 and 7.

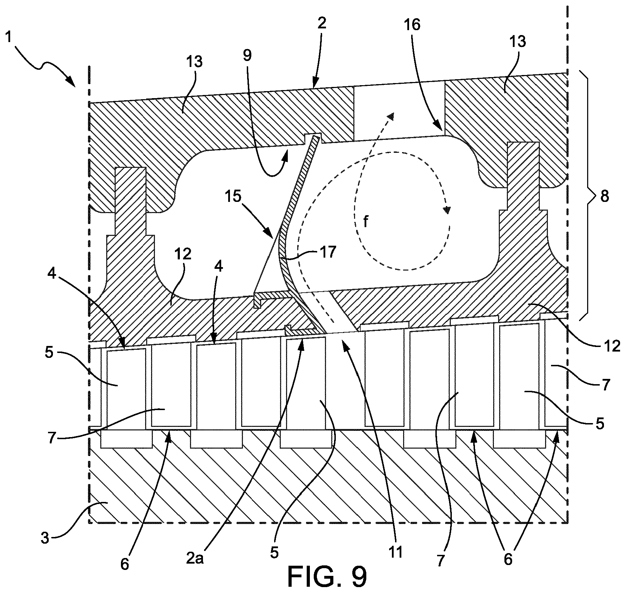

Alternatively, always in order to reduce the effective space for the airflow f inside the bleed cavity 9, the air deflector member 15 can be configured to have a radial extension inside the bleed cavity 9 to act as the foregoing described partition wall. According two different embodiments of this solution, the air deflector member 15 can comprise an outer edge substantially in flush with the inner surface of the wall 13 or housed inside a recessed seat realized as a groove the inner surface of the wall 13. This last embodiment is schematically represented in figure 9.

## Claims

1. An axial compressor (1) comprising: a tubular casing (2); a drive shaft (3) extending in axially rotatable manner inside the central cavity (2a) of said casing (2) coaxial to the latter; a number of annular blade rows (4) spaced along and stably fixed to the drive shaft (3); and a number of annular vane rows (6) stably fixed to the peripheral wall (8) of said casing (2) intercalated to the annular blade rows (4);
the compressor (1) being additionally provided with at least one bleed cavity (9) formed within the peripheral wall (8) of said casing (2), and a corresponding bleeding slot (11) which is formed in the peripheral wall (8) to put said bleed cavity (9) into direct communication with the central cavity (2a) of said casing (2);
the compressor (1) additionally comprising at least one air deflector member (15) which is located inside the bleed cavity (9), and is adapted to divert/guide the airflow (f) of compressed air entering and/or circulating inside the bleed cavity (9) for reducing the air turbulence area inside the bleed cavity (9);
the compressor (1) being **characterized in that** said at least one air deflector member (15) is located inside the bleed cavity (9) adjacent to said annular bleeding slot (11), and is designed to guide/divert said airflow (f) towards the air outlet/s (16) of the bleed cavity (9), so as to reduce the size of the vortices that the airflow (f) forms while flowing out of the bleed cavity (9) via the corresponding air outlet/s (16);
said at least one air deflector member (15) being provided with a circumferentially-arranged flap portion (17) that rises from the inner surface of the bleed cavity (9) to form a ramp or slope for the airflow (f) that has an arched profile so as to smoothly turn the velocity vector of said airflow (f) in direction of the air outlets (16);
said flap portion (17) having, on its front face, a number of protruding fins (19) which are spaced side-by-side to one another in a circumferential direction.

2. Axial compressor according to Claim 1, **characterized in that** said air deflector member (15) is designed to reduce, inside the bleed cavity (9), the effective space at disposal of said airflow (f) for whirling while flowing out of the bleed cavity (9) via the corresponding air outlet/s (16).

3. Axial compressor according to Claim 1 or 2, **characterized in that** said protruding fins (19) have a slightly arched shape/profile so as to gradually change the circumferential component of the flow vector of the airflow (f) extracted from the compressor annulus.

4. Axial compressor according to Claim 1, 2 or 3, **characterized in that** said protruding fins (19) have an arched shape/profile so as to gradually change the circumferential component of the flow vector of the airflow (f) extracted from the compressor annulus.

5. Axial compressor according to any one of the preceding claims, **characterized in that** said air deflector member (15) is discrete from said casing (2) and is firmly fixed to the peripheral wall (8) of said casing (2).

6. Axial compressor according to any one of the preceding claims, **characterized in that** said bleed cavity (9) is substantially annular in shape and is formed within the peripheral wall (8) of said casing (2) so as to surround the central cavity (2a) of said casing (2).

7. Axial compressor according to Claim 6, **characterized in that** said bleeding slot (11) is substantially annular in shape and is located on the peripheral wall (8) of said casing (2) immediately downstream of an intermediate compressor stage (4, 6) of said axial compressor (1).

8. Axial compressor according to Claim 6 or 7, **characterized in that** said air deflector member (15) is annular in shape.

9. Axial compressor according to Claim 8, **characterized in that** said air deflector member (15) is divided into a number of segments (18) that are arranged circumferentially inside the peripheral wall (8) of said casing (2), nearly adjacent and coplanar to one another, so as to form a circular rib that protrudes from the inner surface of said bleed cavity (9)

10. Axial compressor according to any one of the preceding claims, **characterized in that** it comprises a partition wall (20) inside the bleed cavity (9) or the deflector member (15) has a radial extension configured to divide the bleed cavity (9) in two sub-cavities.

11. Axial compressor according to any one of the preceding claims, **characterized in that** said air deflector member (15) is located adjacent to or in said bleeding slot (11).

12. Gas turbine engine (100) comprising: a compressor (1) in which compression of the outside air occurs for producing a flow of compressed air; a combustor assembly (102) in which combustion of a mixture of fuel and compressed air arriving from said compressor (1) occurs for producing a flow of hot gasses; and an expansion turbine (104) in which expansion of the hot gasses arriving from said combustor assembly (102) occurs;
the gas turbine engine (100) being **characterized in that** said compressor (1) is an axial compressor according to any one of Claims 1-11.

## Patentansprüche

1. Axialverdichter (1), umfassend: ein rohrförmiges Gehäuse (2); eine Antriebswelle (3), die sich axial drehbar innerhalb des zentralen Hohlraums (2a) des Gehäuses (2) koaxial zu diesem erstreckt; eine Anzahl von ringförmigen Schaufelreihen (4), die entlang der Antriebswelle (3) beabstandet und stabil daran befestigt sind; und eine Anzahl von ringförmigen Leitschaufelreihen (6), die stabil an der Umfangswand (8) des Gehäuses (2) befestigt und zwischen die ringförmigen Schaufelreihen (4) eingefügt sind;
wobei der Verdichter (1) außerdem mit wenigstens einem innerhalb der Umfangswand (8) des Gehäuses (2) ausgebildeten Abblashohlraum (9) und einem entsprechenden Abblasschlitz (11) versehen ist, der in der Umfangswand (8) ausgebildet ist, um den Abblashohlraum (9) in direkte Verbindung mit dem zentralen Hohlraum (2a) des Gehäuses (2) zu bringen;
wobei der Verdichter (1) außerdem wenigstens ein Luftablenkungselement (15) umfasst, das innerhalb des Abblashohlraums (9) angeordnet ist und dazu eingerichtet ist, den Luftstrom (E) von in den Abblashohlraum (9) eintretender und/oder darin zirkulierender verdichteter Luft zu führen/umzulenken, um den Luftturbulenzbereich innerhalb des Abblashohlraums (9) zu reduzieren;
wobei der Verdichter (1) **dadurch gekennzeichnet ist, dass** das wenigstens eine Luftablenkungselement (15) innerhalb des Abblashohlraums (9) neben dem ringförmigen Abblasschlitz (11) angeordnet ist und dazu ausgelegt ist, den Luftstrom (f) in Richtung zu dem/den Luftauslass/- auslässen (16) des Abblashohlraums (9) zu führen/umzulenken, um somit die Größe der Wirbel zu reduzieren, die der Luftstrom (f) ausbildet, während er aus dem Abblashohlraum (9) durch den/die entsprechenden Luftauslass/-auslässe (16) ausströmt;
wobei das wenigstens eine Luftablenkungselement (15) mit einem in Umfangsrichtung angeordneten Klappenabschnitt (17) versehen ist, der sich von der Innenfläche des Abblashohlraums (9) erhebt, um eine Rampe oder Schrägfläche für den Luftstrom (f) auszubilden, die ein gewölbtes Profil aufweist, um den Geschwindigkeitsvektor des Luftstroms (f) sanft in Richtung der Luftauslässe (16) zu drehen;
wobei der Klappenabschnitt (17) auf seiner Vorderfläche eine Anzahl von vorstehenden Flossen (19) aufweist, die in Umfangsrichtung nebeneinander beabstandet angeordnet sind.

2. Axialverdichter nach Anspruch 1, **dadurch gekennzeichnet, dass** das Luftablenkungselement (15) so ausgelegt ist, dass es innerhalb des Abblashohlraums (9) den effektiven Raum reduziert, der dem Luftstrom (f) zur Verwirbelung zur Verfügung steht, während er durch den/die entsprechenden Luftauslass/Luftauslässe (16) aus dem Abblashohlraum (9) strömt.

3. Axialverdichter nach Anspruch 1 oder 2, **dadurch gekennzeichnet, dass** die vorstehenden Flossen (19) eine/ein leicht gewölbte(s) Form/Profil aufweisen, um die Umfangskomponente des Strömungsvektors des aus dem Verdichterringraum abgezogenen Luftstroms (f) allmählich zu verändern.

4. Axialverdichter nach Anspruch 1, 2 oder 3, **dadurch gekennzeichnet, dass** die vorstehenden Flossen (19) eine/ein gewölbte(s) Form/Profil aufweisen, um die Umfangskomponente des Strömungsvektors des aus dem Verdichterringraum abgezogenen Luftstroms (f) allmählich zu verändern.

5. Axialverdichter nach einem der vorangehenden Ansprüche, **dadurch gekennzeichnet, dass** das Luftablenkungselement (15) von dem Gehäuse (2) getrennt ausgebildet ist und fest an der Umfangswand (8) des Gehäuses (2) befestigt ist.

6. Axialverdichter nach einem der vorangehenden Ansprüche, **dadurch gekennzeichnet, dass** der Abblashohlraum (9) im Wesentlichen ringförmig ist und innerhalb der Umfangswand (8) des Gehäuses (2) ausgebildet ist, so dass er den zentralen Hohlraum (2a) des Gehäuses (2) umgibt.

7. Axialverdichter nach Anspruch 6, **dadurch gekennzeichnet, dass** der Abblasschlitz (11) im Wesentlichen ringförmig ist und an der Umfangswand (8) des Gehäuses (2) unmittelbar stromabwärts einer Zwischenverdichterstufe (4, 6) des Axialverdichters (1) angeordnet ist.

8. Axialverdichter nach Anspruch 6 oder 7, **dadurch gekennzeichnet, dass** das Luftablenkungselement (15) ringförmig ist.

9. Axialverdichter nach Anspruch 8, **dadurch gekennzeichnet, dass** das Luftablenkungselement (15) in eine Anzahl von Segmenten (18) unterteilt ist, die in Umfangsrichtung innerhalb der Umfangswand (8) des Gehäuses (2) nahezu nebeneinander und koplanar zueinander angeordnet sind, um somit eine kreisförmige Rippe auszubilden, die von der Innenfläche des Abblashohlraums (9) vorsteht.

10. Axialverdichter nach einem der vorangehenden Ansprüche, **dadurch gekennzeichnet, dass** er eine Trennwand (20) im Inneren des Abblashohlraums (9) umfasst oder das Ablenkungselement (15) eine radiale Erweiterung aufweist, die dazu konfiguriert ist, den Abblashohlraum (9) in zwei Teilhohlräume zu unterteilen.

11. Axialverdichter nach einem der vorangehenden Ansprüche, **dadurch gekennzeichnet, dass** das Luftablenkungselement (15) neben oder in dem Abblasschlitz (11) angeordnet ist.

12. Gasturbinenmaschine (100), umfassend: einen Verdichter (1), in dem die Außenluft verdichtet wird, um einen Strom verdichteter Luft zu erzeugen; eine Brenneranordnung (102), in der ein Gemisch aus Brennstoffgas und verdichteter Luft, die von dem Verdichter (1) kommt, verbrannt wird, um einen Strom heißer Gase zu erzeugen; und eine Entspannungsturbine (104), in der die heißen Gase, die von der Brenneranordnung (102) kommen, entspannt werden;
wobei die Gasturbinenmaschine (100) **dadurch gekennzeichnet ist, dass** der Verdichter (1) ein Axialverdichter nach einem der Ansprüche 1-11 ist.

## Revendications

1. Compresseur axial (1) comprenant : une enveloppe (2) tubulaire ; un arbre d'entraînement (3) s'étendant de manière à pouvoir tourner axialement à l'intérieur de la cavité centrale (2a) de ladite enveloppe (2) coaxiale à cette dernière ; un certain nombre de rangées d'aubes annulaires (4) espacées le long de l'arbre d'entraînement (3) et fixées de manière stable à ce dernier ; et un certain nombre de rangées d'aubes annulaires (6) fixées de manière stable à la paroi périphérique (8) de ladite enveloppe (2) intercalées aux rangées d'aubes annulaires (4) ;
le compresseur (1) étant en outre pourvu d'au moins une cavité de purge (9) formée à l'intérieur de la paroi périphérique (8) de ladite enveloppe (2), et d'une fente de purge (11) correspondante qui est formée dans la paroi périphérique (8) pour mettre ladite cavité de purge (9) en communication directe avec la cavité centrale (2a) de ladite enveloppe (2) ;
le compresseur (1) comprenant en outre au moins un élément déflecteur d'air (15) qui est situé à l'intérieur de la cavité de purge (9), et est adapté pour dévier/guider le flux d'air (f) de l'air comprimé entrant et/ou circulant à l'intérieur de la cavité de purge (9) afin de réduire la zone de turbulence de l'air à l'intérieur de la cavité de purge (9) ;
le compresseur (1) étant **caractérisé en ce que** ledit au moins un élément déflecteur d'air (15) est situé à l'intérieur de la cavité de purge (9) adjacente à ladite fente de purge (11) annulaire, et est conçu pour guider/dévier ledit flux d'air (f) vers la/les sortie(s) d'air (16) de la cavité de purge (9), de manière à réduire la taille des tourbillons que le flux d'air (f) forme en s'écoulant hors de la cavité de purge (9) via la/les sortie(s) d'air (16) correspondante(s) ;
ledit au moins un élément déflecteur d'air (15) étant pourvu d'une partie de rabat (17) disposée circonférentiellement qui s'élève à partir de la surface intérieure de la cavité de purge (9) pour former une rampe ou pente pour le flux d'air (f) qui a un profil arqué de manière à faire tourner en douceur le vecteur de vitesse dudit flux d'air (f) en direction des sorties d'air (16) ;
ladite partie de rabat (17) présentant, sur sa face avant, un certain nombre d'ailettes saillantes (19) qui sont espacées côte à côte l'une de l'autre dans une direction circonférentielle.

2. Compresseur axial selon la revendication 1, **caractérisé en ce que** ledit élément déflecteur d'air (15) est conçu pour réduire, à l'intérieur de la cavité de purge (9), l'espace effectif à disposition dudit flux d'air (f) pour le tourbillonnement tout en s'écoulant hors de la cavité de purge (9) par la/les sortie(s) d'air (16) correspondante(s).

3. Compresseur axial selon la revendication 1 ou 2, **caractérisé en ce que** lesdites ailettes saillantes (19) ont une forme/un profil légèrement arqué de manière à modifier progressivement la composante circonférentielle du vecteur d'écoulement du flux d'air (f) extrait de l'anneau du compresseur.

4. Compresseur axial selon la revendication 1, 2 ou 3, **caractérisé en ce que** lesdites ailettes saillantes (19) ont une forme/un profil arqué de manière à modifier progressivement la composante circonférentielle du vecteur d'écoulement du flux d'air (f) extrait de l'anneau du compresseur.

5. Compresseur axial selon l'une quelconque des revendications précédentes, **caractérisé en ce que** ledit élément déflecteur d'air (15) est distinct de ladite enveloppe (2) et est solidement fixé à la paroi périphérique (8) de ladite enveloppe (2).

6. Compresseur axial selon l'une quelconque des revendications précédentes, **caractérisé en ce que** ladite cavité de purge (9) est de forme sensiblement annulaire et est formée à l'intérieur de la paroi périphérique (8) de ladite enveloppe (2) de manière à entourer la cavité centrale (2a) de ladite enveloppe (2).

7. Compresseur axial selon la revendication 6, **caractérisé en ce que** ladite fente de purge (11) est de forme sensiblement annulaire et est située sur la paroi périphérique (8) de ladite enveloppe (2) immédiatement en aval d'un étage de compression intermédiaire (4, 6) dudit compresseur axial (1).

8. Compresseur axial selon la revendication 6 ou 7, **caractérisé en ce que** l'élément déflecteur d'air (15) est de forme annulaire.

9. Compresseur axial selon la revendication 8, **caractérisé en ce que** ledit élément déflecteur d'air (15) est divisé en un certain nombre de segments (18) qui sont disposés circonférentiellement à l'intérieur de la paroi périphérique (8) de ladite enveloppe (2), presque adjacents et coplanaires les uns par rapport aux autres, de manière à former une nervure circulaire qui fait saillie de la surface intérieure de ladite cavité de purge (9).

10. Compresseur axial selon l'une quelconque des revendications précédentes, **caractérisé en ce qu'**il comprend une paroi de séparation (20) à l'intérieur de la cavité de purge (9) ou l'élément déflecteur (15) présente une extension radiale configurée pour diviser la cavité de purge (9) en deux sous-cavités.

11. Compresseur axial selon l'une quelconque des revendications précédentes, **caractérisé en ce que** ledit élément déflecteur d'air (15) est situé de manière adjacente à ou dans ladite fente de purge (11).

12. Moteur à turbine à gaz (100) comprenant : un compresseur (1) dans lequel une compression de l'air extérieur a lieu pour produire un flux d'air comprimé ; un ensemble de chambre de combustion (102) dans lequel une combustion d'un mélange de carburant et d'air comprimé provenant dudit compresseur (1) a lieu pour produire un flux de gaz chauds ; et une turbine d'expansion (104) dans laquelle une détente des gaz chauds provenant de ladite chambre de combustion (102) a lieu ;
le moteur à turbine à gaz (100) étant **caractérisé en ce que** ledit compresseur (1) est un compresseur axial selon l'une quelconque des revendications 1 à 11.
